# EUROPEAN PATENT APPLICATION

(11) **EP 4 401 173 A1**
(43) Date of publication of application: **17.07.2024**
(21) Application number: 23151750.9
(22) Date of filing: 16.01.2023
(51) Int. Cl.: H01M 8/04007, H01M 8/0432, H01M 8/0438, H01M 8/04537, H01M 8/04664, H01M 8/18, H01M 8/2475, H01M 8/248, H01M 8/2484, H01M 8/249

(54) **STACK RACK SYSTEM**

(71) Applicant: Liva Power Management Systems GmbH, 65926 Frankfurt am Main (DE)
(72) Inventor: FINK, Holger, 65926 Frankfurt am Main (DE)
(74) Representative: Fuchs Patentanwälte Partnerschaft mbB

(57) **Abstract**

The present invention relates to a cell stack unit (20) for a redox flow battery, comprising a plurality of battery core stacks (12), each in turn comprising a plurality of battery cells, which are stacked along a stacking direction (S) to form at least one cell column (10) and are connected within the at least one cell column (10) by connection elements (14) which are provided between pairs of core stacks (12), wherein the battery cells are adapted to produce electrical power by means of a redox reaction of two energy storing electrolyte solutions, a rack (22) extending on both sides of the at least one cell column (10) with respect to the stacking direction (S), wherein at least one first end plate (16a) is provided to the rack (22), which is arranged to support the at least one cell column (10) on a first end with respect to the stacking direction (S), a tensioning system (30) provided to the rack (22), which is adapted to tension the at least one cell column (10) towards the first end plate (16a) on a second end thereof with respect to the stacking direction (S) by means of at least one second end plate (16b), a fluid system, which is adapted to supply the battery cells with two energy storing electrolyte solutions from respective reservoir containers, and an electrical system (36), which is adapted to output electrical power produced in the battery cells. The present invention also relates to a redox flow battery, comprising such a cell stack unit (20).

## Description

The present invention relates to a cell stack unit for a redox flow battery as well as a redox flow battery comprising such a cell stack unit.

Redox flow batteries are known types of electrochemical cells in which two energy storing electrolyte solutions are pumped along separate sides of a membrane in respective flow chambers. As a consequence, ions are transferred inside the cell through the membrane separating the two solutions and an electric voltage can be tapped between respective positive and negative current collectors assigned to the two solution flow chambers.

Thus, redox flow batteries may be used in similar scenarios as fuel cells or rechargeable batteries and have the advantage that the corresponding electrolyte solutions can easily be stored in tanks of arbitrary sizes such that there exists no principle technical limit on achievable capacities, in particular if replaceable and rechargeable tanks are used.

Examples of redox flow batteries and related techniques and methods are for example known from prior art documents CN 210 723 236 U, US 2008/0981247 A1, US 2021/0359331 and WO 2016/007555 A1.

Therein, CN 210 723 236 U describes a flow battery unit and energy storage system, in which the necessary components are monolithically assembled without a high degree of modularity. In particular, the piping for supplying the electrolyte solutions is fixedly arranged around a cell stack unit such that replacing or accessing individual battery cells is not trivially possible. Similarly, US 2008/0981247 A1 discloses a cell frame for a redox flow battery as well a redox flow battery in which four core stacks are mounted between a single pair of end plates. The corresponding frame comprises the fluid delivery system of the cell stack and is thus rather sizeable which leads to reduced flexibility of the overall system

Furthermore, US 2021/359331 A1 discloses a double-stack redox flow battery, in which a cell stack comprised of two core stacks is disposed between a pair of endplates. Again, the rack of the system is rather large and complicated to manufacture. WO 2016/007555 A2 relates to systems and methods in a redox flow battery in which the cell stacks are individually connected to a fluid supply system. Therein, the rack merely serves to hold the cell stacks in place and does not contribute to compressing the individual cells, which has to be accounted for by additional means.

Thus, the redox flow batteries and cell stack units known from the prior art all have disadvantages concerning their flexibility, modularization and integration and there exists a demand for improved redox flow batteries as well as cell stack units for this purpose that are suitable to output large electrical power while at the same time maintaining a highly modularized and economical design.

For this purpose, the cell stack unit for a redox flow battery according to the present invention comprises a plurality of battery core stacks, each in turn comprising a plurality of battery cells that are stacked along a stacking direction to form at least one cell column and are connected within the at least one cell column by connection elements that are provided between pairs of battery core stacks, wherein the battery cells are adapted to produce electrical power by means of a redox reaction of two energy storing electrolyte solutions, the cell stack further comprising a rack extending on both sides of the at least one cell column with respect to the stacking direction, wherein at least one first end plate is provided to the rack, which is arranged to support the at least one cell column on a first end with respect to the stacking direction, a tensioning system provided to the rack that is adapted to tension the at least one cell column towards the first end plate on the second end thereof with respect to the stacking direction by means of at least one second end plate, a fluid system, which is adapted to supply the battery cells with two energy storing electrolyte solutions from respective reservoir containers, and an electrical system, which is adapted to output electrical power produced in the battery cells.

By employing such a design for a cell stack unit for a redox battery, due to the modularization of the battery cells into battery core stacks and cell columns, theoretical power output values of 50 or even 100 kW and above may be realized. Furthermore, by integrating several battery cells into replaceable battery core stacks, a high degree of standardization and modularization can be achieved and pre-fabricated as well as pre-tested components and modules may be employed in order to reduce installation and mounting efforts. Additionally, structural material and periphery components may also be reduced due to the modularized and highly efficient design of the cell stack unit according to the present invention.

In addition, in the case of malfunctioning of a battery core stack, said battery core stack may be easily serviced in the cell stack unit according to the present invention and even when it has already been installed, it is possible to quickly and efficiently replace said battery core stacks by corresponding replacement units which may have been tested for correct operation prior thereto. To summarize, the modular design of the cell stack unit according to the present invention allows for an economical integration of easy and cheap to produce modular battery core stacks to a cell stack unit with high potential power output and drastically reduces the required piping and electrical wiring efforts.

In certain embodiments of the cell stack unit according to the present invention, the stacking direction of the at least one cell column may correspond to a substantially horizontal or vertical direction which allows for easy access to the individual battery core stacks from a lateral side of the cell stack unit. This feature thus improves maintainability of the cell stack unit and allows for easy installation of the corresponding redox flow battery.

In particular, the battery core stacks of the cell stack unit according to the present invention may be formed as self-contained modules that can be individually inserted into the rack. For this purpose, each core stack may be equipped with all required interface components, in particular for the supply of the electrolyte solutions, electrical wiring and potentially cooling assemblies for cooling the battery core stack during its operation. These interface components may contain, if required, a tensioning system to take up mounting forces, in particular directed in a stacking direction, like compression forces from electrode felts or gaskets, and provide the structural integrity of a respective core stack with its cells. In order to provide a cheap solution, the above-mentioned tensioning system does not necessarily have to take up forces due to pressurization while being leak tested or while being in regular operation.

In order to further increase the modularity and maintainability of the cell stack unit according to the present invention, a single respective first and/or second end plate may be provided for each cell column. In such embodiments, each cell column may individually be compressed and demounted in case one of its battery core stacks would have to be replaced. However, alternative embodiments are also conceivable, in which single first and/or second end plates are provided for a plurality of cell columns each.

In certain embodiments of the present invention, the fluid system may comprise a respective pair of manifold lines for each of the two electrolyte solutions, wherein each of the pairs comprises a feed line and a return line, and a respective pair of branch lines for each of the two electrolyte solutions and each cell column. By employing a fluid system of this type, the necessary piping effort for supplying the electrolyte solutions to all battery cells of the cell stack unit is minimized and the modularization of the battery core stacks may be accounted for.

In particular, the pairs of branch lines of the cell columns may each be passing through the at least one first end plate of the corresponding at least one cell column in order to further reduce installation efforts thereof. Alternatively, the pairs of branch lines may be guided outside the at least one cell column, wherein preferably each of the core stacks is individually connected to the respective branch lines. In such embodiments, the branch lines may be positioned outside the cell columns which may on the one hand increase the necessary installation space thereof and might block access to the battery core stacks from the respective side, however, may on the other hand facilitate the mounting and interfacing of the individual battery core stacks in the respective cell column due to easier connection thereof into the fluid system.

Furthermore, the fluid system may comprise a respective pump for each of the electrolyte solutions. By assigning said two pumps to the cell stack unit, the flexibility and autarchy thereof may further be increased since fewer external components are required for the operation of the resulting redox flow battery.

Additionally, in the cell stack unit according to the present invention, the fluid system may further comprise a collecting basin for leaked electrolyte solution, wherein preferably a leakage sensor is provided to the collecting basin. By providing said collecting basin, a leakage of electrolyte solution to the outside of the cell stack unit can be prevented, and by further installing a corresponding leakage sensor at a suitable position, possible malfunctions of the fluid system may be detected and recovered early in order to prevent further damage to the system and ensure the proper operation of the cell stack unit.

Furthermore, the fluid system may comprise at least one sensor unit, for example a pressure sensor and/or a temperature sensor, which is preferably provided to one of the manifold lines, and/or the fluid system may comprise a heat exchanger, and/or at least one current and/or voltage sensor may be provided to at least one of the core stacks and/or the cell stack unit may comprise at least one structure-born sound sensor. All of the above-mentioned sensor types may further help ensure proper operation of the cell stack unit by detecting any malfunction or undesired operational states thereof and in particular of its fluid system. The data collected by the individual sensor units may be forwarded to a corresponding control unit which is adapted for a further processing thereof, such as the control unit of the corresponding redox flow battery mentioned below.

In order to further facilitate the electrical wiring of the individual battery core stacks within the at least one cell column, they may alternately be oriented with reversed polarity. Thus, respective pairs of positive and negative terminals of neighboring battery core stacks are positioned adjacent to one another and can for example be contacted with a single current collector element, thus further reducing the number of components of the electrical system and facilitating its installation.

In particular, the electrical system may comprise at least one pair of bus bars running along the stacking direction with which the respective core stacks or groups of core stacks, which are connected in series, may be connected, preferably from below via the above-mentioned current collectors. This feature also increases the modularity and maintainability of the cell stack unit according to the present invention and thus contributes to the optimization of its electrical systems.

In order to be able to connect the cell stack with a grid or a DC bus of higher voltage, the cell stack unit of according to the present invention may further comprise a power conversion system. To reduce wiring length, it may in particular by beneficial if said power conversion system is situated close to the cell stack itself. This could be realized by positioning the corresponding electrical cabinet or cabinets directly beside or above the cell stack, in particular mounted on the same rack or skid. Thus, cable length and associated electrical losses can be reduced. The same applies to electrical fuses and switches.

In certain embodiments of the cell stack unit according to the present invention, the rack may be formed as a frame extending around the at least one cell column, comprising two respective longitudinal side extending along the stacking direction and two transverse sides extending perpendicular thereto, wherein one of the two transverse sides may be provided with the at least one first end plate, whereas the other of the two transverse sides may be provided with the tensioning system, and/or wherein the rack may be provided with attachment points for moving the cell stack unit, for example by means of an external crane. Such a design of the rack allows sufficient mechanical stability and rigidity of the cell stack unit while allowing access to the individual battery core stacks from at least one lateral side thereof and reduces the overall weight and required material for assembling the cell stack unit according to the present invention.

While different types of battery cells may in principle be employed in cell stack units according to the present invention, in particular in embodiments with especially high efficiency, all of the battery cells may be formed substantially identically and/or the effective area of at least one of the battery cells in a transverse section with respect to the stacking direction may be smaller or equal 2,500 cm³, in particular smaller or equal 1,000 cm².

According to a second aspect, the present invention relates to a redox flow battery, comprising a cell stack unit according to the present invention as just described, at least two reservoir containers for energy storing electrolyte solutions that are coupled to the fluid system of the cell stack unit and a control unit which is adapted to control and/or monitor the operation of the redox flow battery. Said control unit may for example receive sensor data from the sensor units mentioned above and may control the power output as well as electrolyte supply to the individual battery cells during operation of the battery. Furthermore, the at least two reservoir containers may be replaceable such that once the energy stored in said reservoir containers is exhausted, they may be replaced by newly charged reservoir containers in order to allow for an almost continuous operation of the redox flow battery according to the present invention.

Further features and advantages of the present invention will become even clearer from the following description of an embodiment thereof together with the accompanying drawings. Said drawing showing in particular:
- Figure 1:: two views of a single cell column which may be employed in a cell stack unit according to the present invention;
- Figure 2:: a cell stack unit according to the present invention employing a plurality of cell columns as shown in figure 1 in a front view;
- Figure 3:: the cell stack unit of figure 2 in an isometric view with some of its battery core stacks removed; and
- Figure 4:: a schematic overview of a redox flow battery according to the present invention employing the cell stack unit of figures 2 and 3.

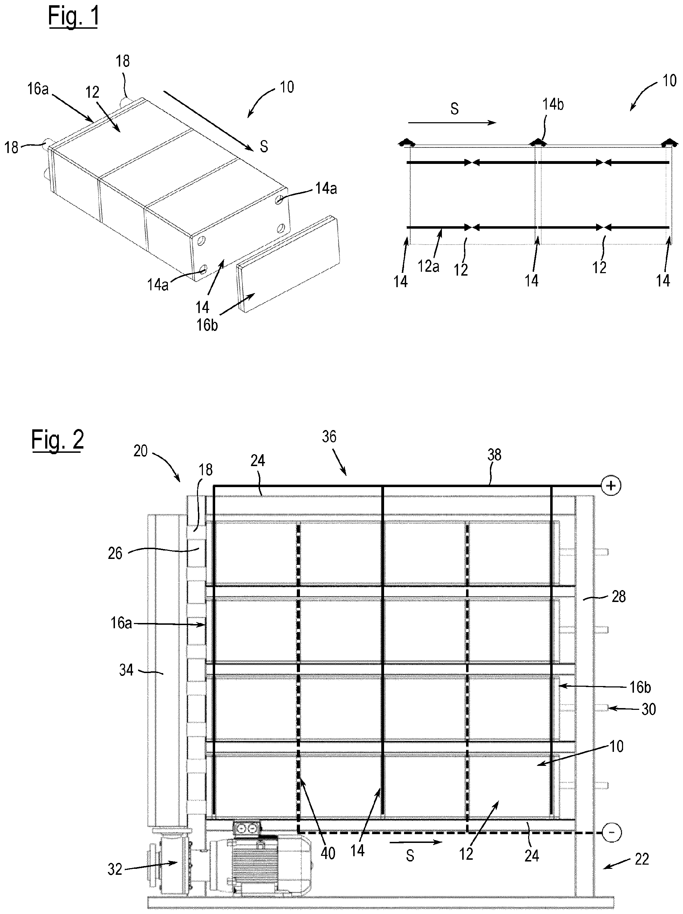

In figure 1, a single cell column for use in a cell stack unit of a redox flow battery and comprising a plurality of individual battery core stacks 12 is shown in an isometric view and a schematic side view and generally denoted with reference numeral 10. Therein, each of the individual battery cores stacks 12 in turn comprises a plurality of battery cells that are stacked along a stacking direction S. Between each pair of neighboring battery core stacks 12, a respective connection element 14 is provided that comprises electrical current collectors which are to be interfaced to the adjacent battery core stacks 12 by alternately orienting the battery core stacks 12 within the cell column 10 concerning their polarity, such that respective positive and negative terminals of neighboring battery core stacks 12 are facing towards one another and can be interfaced on a single connection element 14 with reduced electrical wiring necessary. The connection element 14 may also be divided in two functional units each representing the fixed stacking enclosure to a given side of a core stack 12.

As can also be seen from figure 1, first and second end plates 16a and 16b are provided to the cell column 10 on both its ends with respect to the stacking direction S which allows for an improved integration of the cell column 10 within the cell stack unit 20 described below. As can be seen on the left side of figure 1, the first end plate 16a is further equipped with two pairs of branch lines 18 of a fluid system of the cell stack unit 20 which are passing through the first end plate 16a and allow for supply of two electrolyte solutions to each battery cell of each battery core stack 12 within the cell column 10. For this purpose, the individual battery core stacks 12 as well as the connection elements 14 themselves are also provided with fluid conduits, which allows for a propagation of the electrolyte solutions through the entire cell column 10. In figure 1, corresponding fluid conduits 14a provided to the visible connection element 14 is shown in a schematic manner.

In the schematic side view on the right side of figure 1, for the purpose of illustration, only two battery core stacks 12 and three connection elements of the cell column 10 are shown. Therein, arrows 12a illustrate that a lightweight tensioning system is provided in each of the individual battery core stacks 12 in order to absorb mounting forces in the respective core stack 12 and to ensure structural integrity thereof outside of the cell column, for example before it is inserted or in case of a replacement. Furthermore, in said schematic side view, protective elements 14b are shown, which have been omitted in the isometric view on the left side of figure 1 and which cover the connection elements 14 from above in a configuration as shown in figure 2 and discussed below, in which the stacking direction S corresponds to a horizontal direction and multiple core stacks 12 are positioned above one another.

Said protective elements 14b are sealed against the respective core stacks 12 and prevent fluids from coming into contact with the connection elements 14 from above. Thus, the protective elements 14b serve as safety features, in particular in cases in which a leakage of electrolyte solution occurs in one of the core stacks 12 of a cell column 10 which might then drop down and cause damage in one of the connection elements 14 of a cell column positioned below, such as a short circuit. Instead, leaked electrolyte solution may be led away from the core stacks 12 and connection elements 14 by means of suitable channels or grooves and into a collecting basin not shown in the figures.

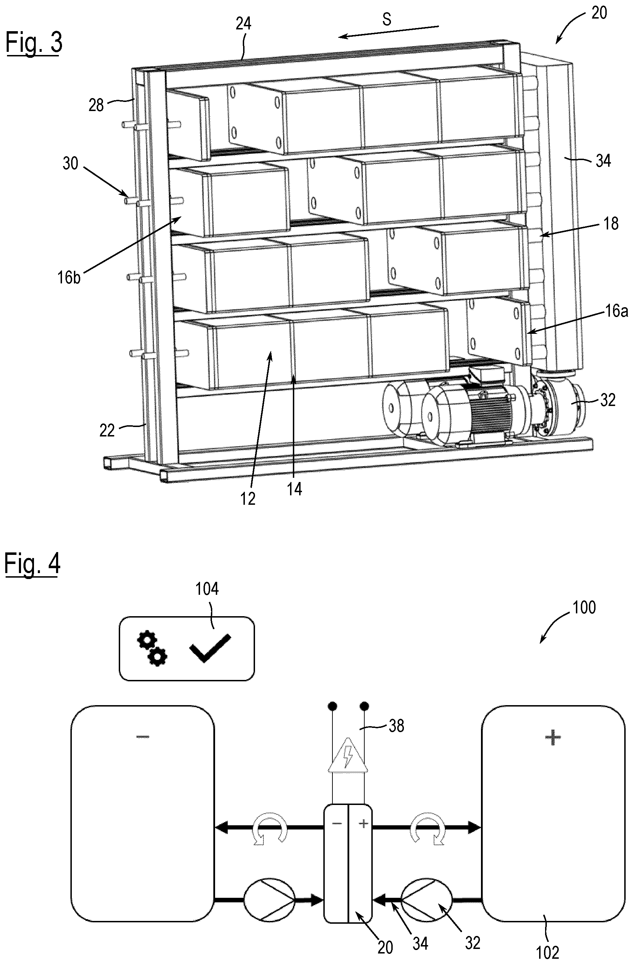

Now referring to figures 2 and 3, a cell stack unit 20 is shown therein in a front view and an isometric view, respectively, with some battery core stacks removed in figure 3. As can be seen in figures 2 and 3, in the cell stack unit 20, in total four identical cell columns 10 are installed in parallel within a rack 22 extending on both sides of the cell columns 10 with respect to their stacking directions S. Said rack 22 is formed as a frame extending around the cell columns 10 and comprising two respective longitudinal sides 24 extending along the stacking direction S and first and second transverse sides 26 and 28 extending perpendicular to the stacking direction S. It can be seen that the first end plate 16a of each cell column 10 is fixedly provided to the first transverse side 26 of the rack 22, while the second transverse side 28 is provided with a tensioning system 30 that is adapted to be able to compress each second end plate 16b of the four cells columns 10 individually along the stacking direction S for compressing the respective battery core stacks 12 within each cell column 10.

As can be seen from the isometric view of figure 3, in which certain battery core stacks 12 have been removed, by loosening the tensioning system 30 for a corresponding cell column 10, individual battery core stacks 12 can be removed from the respective cell column 10 and may be replaced in case of malfunctioning of one or more of its battery cells. Thus, said battery core stacks 12 may be provided as self-contained modules and can individually be inserted into the rack 22 between respective connection elements 14 and be also easily be removed therefrom.

The core stacks 12 of a respective cell column 10 may be positioned, moved, and guided to the end position by means of a system of rails or a suspension gear not which has been omitted from the present figures in order to improve visibility of the remaining components. To prevent damage due to possible leakages in case of a fault or accident or leakages during replacement of a core stack 12, a device for protecting the current collector and terminal electrodes from leakage originating in the same cell column 10 or in a cell column 10 positioned above a protective cover may be installed as described above. This improves maintainability and increases the life expectancy of the cell column 10.

As can also be seen in figures 2 and 3, the cell stack unit 20 further comprises two pumps 32, one for each of the two electrolyte solutions, which are to be supplied to the individual battery cells. For this purpose and in order to guide said solutions to the branch lines 18 already mentioned above, the fluid system of the cell stack unit 20 further comprises a respective pair of manifold lines for each of the two electrolyte solutions, wherein each of the pairs in turn comprises a feed line and a return line. Said pairs of manifold lines are arranged in a fluid supply unit 34 mounted to the first transverse side 26 of the rack 22 and individually connected to all branch lines 18 as shown in figures 2 and 3.

Furthermore, even though not explicitly shown in figures 2 and 3 and as already briefly mentioned above, the cell stack unit 20, may as part of its fluid system further comprise a collecting basin for leaked electrolyte solution as well as a leakage sensor provided to the collecting basin or any other suitable position within the cell stack unit 20 at which possible leakages may be detected. Also, the fluid system may further comprise at least one additional sensor unit, for example a pressure sensor and/or a temperature sensor, which may for example be provided to one of the manifold lines in the fluid supply unit 34, and/or the fluid system may comprise a heat exchanger for increasing thermal efficiency of the cell stack unit 20, for example also as part of the fluid supply unit 34.

In a similar manner as the fluid system that is adapted to supply the battery cells with two energy storing electrolyte solutions, an electrical system 36 is also provided in the cell stack unit 20 and adapted to output electrical power produced in the individual battery cells. Said electrical system 36 comprises pairs of bus bars 38 running along the stacking direction S of the core stacks 10 with which the respective core stacks 10 are connected from below by means of dedicated current collectors 40 and are on their output side connected to a power electronics components not shown in the figures.

Lastly, in figure 4, a schematic overview of a redox flow battery 100 is given, which comprises the cell stack unit 20 of figures 2 and 3 as its central piece. The battery 100 further comprises two reservoir containers 102 for storing electrolyte solutions that are coupled to the fluid system of the cell stack unit 10 and in particular the pumps 32 as well as the fluid supply unit 34 thereof. Furthermore, a control unit 104 is provided that controls operation of the cell stack unit 100, for example by suitably operating the pumps 32 and receiving output data of any sensor unit provided at the cell stack unit 20 and monitoring its operation.

## Claims

1. Cell stack unit (20) for a redox flow battery (100), comprising:
- a plurality of battery core stacks (12), each in turn comprising a plurality of battery cells, which are stacked along a stacking direction (S) to form at least one cell column (10) and are connected within the at least one cell column (10) by connection elements (14) which are provided between pairs of core stacks (12),
wherein the battery cells are adapted to produce electrical power by means of a redox reaction of two energy storing electrolyte solutions;
- a rack (22) extending on both sides of the at least one cell column (10) with respect to the stacking direction (S),
wherein at least one first end plate (16a) is provided to the rack (22),
which is arranged to support the at least cell column (10) on a first end with respect to the stacking direction (S);
- a tensioning system (30) provided to the rack (22), which is adapted to tension the at least one cell column (10) towards the first end plate (16a) on a second end thereof with respect to the stacking direction (S) by means of at least one second end plate (16b);
- a fluid system, which is adapted to supply the battery cells with two energy storing electrolyte solutions from respective reservoir containers (102); and
- an electrical system (36), which is adapted to output electrical power produced in the battery cells.

2. Cell stack unit (20) according to claim 1,
wherein the stacking direction (S) of the at least one cell column (10) corresponds to a substantially horizontal or vertical direction.

3. Cell stack unit (20) according to any of the preceding claims,
wherein the battery core stacks (12) are formed as self-contained modules which can individually be inserted into the rack (22).

4. Cell stack unit (20) according to any of the preceding claims,
wherein one respective first and/or second end plate (16a, 16b) is provided for each cell column (10).

5. Cell stack unit (20) according to any of the preceding claims,
wherein the fluid system comprises:
- a respective pair of manifold lines (34) for each of the two electrolyte solutions, wherein each of the pairs comprises a feed line and a return line; and
- a respective pair of branch lines (18) for each of the two electrolyte solutions and each cell column (10).

6. Cell stack unit (20) according to claim 5,
wherein the pairs of branch lines (18) of the cell columns are each passing through the at least one first end plate (16a).

7. Cell stack unit according to claim 5,
wherein the pairs of branch lines are guided outside the at least one cell column, and wherein preferably each of the core stacks is individually connected to the respective branch lines.

8. Cell stack unit (20) according to any of the preceding claims,
wherein the fluid system comprises a respective pump (32) for each of the two electrolyte solutions.

9. Cell stack unit according to any of the preceding claims,
wherein the fluid system further comprises a collecting basin for leaked electrolyte solution, wherein preferably a leakage sensor is provided to the collecting basin.

10. Cell stack unit (20) according to any of the preceding claims,
wherein the fluid system comprises at least one sensor unit, for example a pressure sensor and/or a temperature sensor, which is preferably provided to one of the manifold lines, and/or wherein the fluid system comprises a heat exchanger;
and/or
wherein at least one current and/or voltage sensor is provided to at least one of the core stacks (12);
and/or
wherein the cell stack unit (20) comprises at least one structure-borne sound sensor.

11. Cell stack unit (20) according to any of the preceding claims,
wherein the core stacks (12) within cell columns (10) are alternately oriented with reversed polarity.

12. Cell stack unit (20) according to any of the preceding claims,
wherein the electrical system (36) comprises at least one pair of bus bars (38) running along the stacking direction (S), with which the respective core stacks (12) or groups of core stacks (12), which are connected in series, are connected, preferably from below.

13. Cell stack (20) according to any of the preceding claims,
wherein the rack (22) is formed as a frame extending around the at least one cell column, comprising two respective longitudinal sides (24) extending along the stacking direction (S) and two transverse sides (26, 28) extending perpendicular thereto, wherein one of the two transverse sides (26) is provided with the at least one first end plate (16a), whereas the other of the two transverse sides (28) is provided with the tensioning system (30);
and/or wherein the rack (22) is provided with attachment points for moving the cell stack unit (20), for example by means of an external crane.

14. Cell stack unit (20) according to any of the preceding claims, wherein all of the battery cells are formed substantially identically and/or wherein an effective area of at least one of the battery cells in a transverse section with respect to the stacking direction (S) is smaller or equal 2,500 cm³, in particular smaller or equal 1000 cm².

15. Redox flow battery (100), comprising:
- a cell stack unit (20) according to any of the preceding claims;
- at least two reservoir (102) containers for energy storing electrolyte solutions which are coupled to the fluid system of the cell stack unit; and
- a control unit (104), which is adapted to control and/or monitor an operation of the redox flow battery (100).
